# EUROPEAN PATENT APPLICATION

(11) **EP 4 145 264 A1**
(43) Date of publication of application: **08.03.2023**
(21) Application number: 22189882.8
(22) Date of filing: 11.08.2022
(51) Int. Cl.: G06F 3/04883, G06F 3/04845

(54) **DISPLAY APPARATUS, CARRIER MEANS, AND DISPLAY METHOD**

(30) Priority: 07.09.2021 JP 2021145385; 01.06.2022 JP 2022089897
(71) Applicant: Ricoh Company, Ltd., Tokyo 143-8555 (JP)
(72) Inventor: Yoshida, Takuroh, Tokyo, 143-8555 (JP)
(74) Representative: Marks & Clerk LLP

(57) **Abstract**

A display apparatus (2) including an input reception unit (21, 201) to receive an input of a stroke data item. The input is a user hand drafted input. The display apparatus (2) includes a group determination unit (24, 201) to determine that a plurality of stroke data items including the stroke data item is included in a group of stroke data items indicating a figure, and a display control unit (29, 201) to display, on a display (220), a prediction result in relation to the figure. The prediction result is obtained based on the plurality of stroke data items included in the group.

## Description

### BACKGROUND

### Technical Field

Embodiments of the present disclosure relate to a display apparatus, a carrier means, and a display method.

### Related Art

A technique for automatically switching modes between hand drafted character input and hand drafted figure input is known (for example, Japanese Unexamined Patent Application Publication No. 1985-136890).

In a display apparatus using such the known technique described above, when a user arbitrarily performs hand drafted input, the hand drafted input may be recognized as a figure that is not intended by the user.

### SUMMARY

An embodiment of the present disclosure includes a display apparatus including an input reception unit to receive an input of a stroke data item. The input is a user hand drafted input. The display apparatus includes a group determination unit to determine that a plurality of stroke data items including the stroke data item is included in a group of stroke data items indicating a figure, and a display control unit to display, on a display, a prediction result in relation to the figure. The prediction result is obtained based on the plurality of stroke data items included in the group.

An embodiment of the present disclosure includes a carrier means carrying computer readable codes for controlling a computer system to carry out a method. The method includes receiving an input of a stroke data item. The input is a user hand drafted input. The method includes determining that a plurality of stroke data items including the stroke data item is included in a group indicating a figure, and displaying on a display, a prediction result in relation to the figure. The prediction result is obtained based on the plurality of stroked data items included in the group.

An embodiment of the present disclosure includes a display method. The display method includes receiving an input of a stroke data item. The input is a user hand drafted input. The display method includes determining that a plurality of stroke data items including the stroke data item is included in a group indicating a figure, and displaying on a display, a prediction result in relation to the figure. The prediction result is obtained based on the plurality of stroked data items included in the group.

According to embodiments of the present disclosure, a figure intended by a user is displayed.

### BRIEF DESCRIPTION OF THE SEVERAL VIEWS OF THE DRAWINGS

A more complete appreciation of the disclosure and many of the attendant advantages and features thereof can be readily obtained and understood from the following detailed description with reference to the accompanying drawings, wherein:
FIGS. 1A, 1B, and 1C are diagrams each illustrating an overall configuration of a display apparatus according to a first embodiment of the disclosure;
FIG. 2 is a block diagram illustrating a hardware configuration of the display apparatus according to the first embodiment of the disclosure;
FIG. 3 is an illustration for describing a first condition according to the first embodiment of the disclosure;
FIGS. 4A and 4B are diagrams for describing a circumscribed rectangle and a vicinity rectangle, respectively, according to the first embodiment of the disclosure;
FIG. 5 is an illustration for describing a second condition according to the first embodiment of the disclosure;
FIG. 6 is a block diagram illustrating an example of a functional configuration of the display apparatus according to the first embodiment of the disclosure;
FIGS. 7A, 7B, and 7C are diagrams illustrating data related to stroke data stored in a stroke data storage unit according to the first embodiment of the disclosure;
FIG. 8 is a flowchart illustrating an example of a process performed by the display apparatus according to the first embodiment of the disclosure;
FIG. 9 is a flowchart illustrating another example of a process performed by the display apparatus according to the first embodiment of the disclosure;
FIG. 10 is a diagram illustrating an example of display of predictive conversion candidates for a figure according to the first embodiment of the disclosure;
FIG. 11 is a diagram illustrating an example of a system configuration of a display system according to a second embodiment of the disclosure;
FIG. 12 is an illustration for describing a third condition according to a third embodiment of the disclosure;
FIGS. 13A and 13B are illustrations for describing a circumscribed rectangle according to the third embodiment of the disclosure;
FIG. 14 is an illustration for describing a vicinity rectangle according to the third embodiment of the disclosure;
FIG. 15 is a diagram illustrating an example of a fourth condition according to the third embodiment of the disclosure;
FIG. 16 is a diagram illustrating another example of the fourth condition according to the third embodiment of the disclosure;
FIG. 17 is a block diagram illustrating an example of a functional configuration of the display apparatus according to the third embodiment of the disclosure;
FIG. 18 is a flowchart illustrating an example of a process performed by the display apparatus according to the third embodiment of the disclosure;
FIG. 19 is a flowchart illustrating another example of a process performed by the display apparatus according to the third embodiment of the disclosure;
FIG. 20 is a diagram illustrating an example of display of a predictive conversion candidate for a table according to the third embodiment of the disclosure; and
FIG. 21 is a diagram illustrating another example of display of a predictive conversion candidate for a table according to the third embodiment of the disclosure.

The accompanying drawings are intended to depict embodiments of the present invention and should not be interpreted to limit the scope thereof. The accompanying drawings are not to be considered as drawn to scale unless explicitly noted. Also, identical or similar reference numerals designate identical or similar components throughout the several views.

### DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a," "an," and "the" are intended to include the plural forms as well, unless the context clearly indicates otherwise.

### First Embodiment:

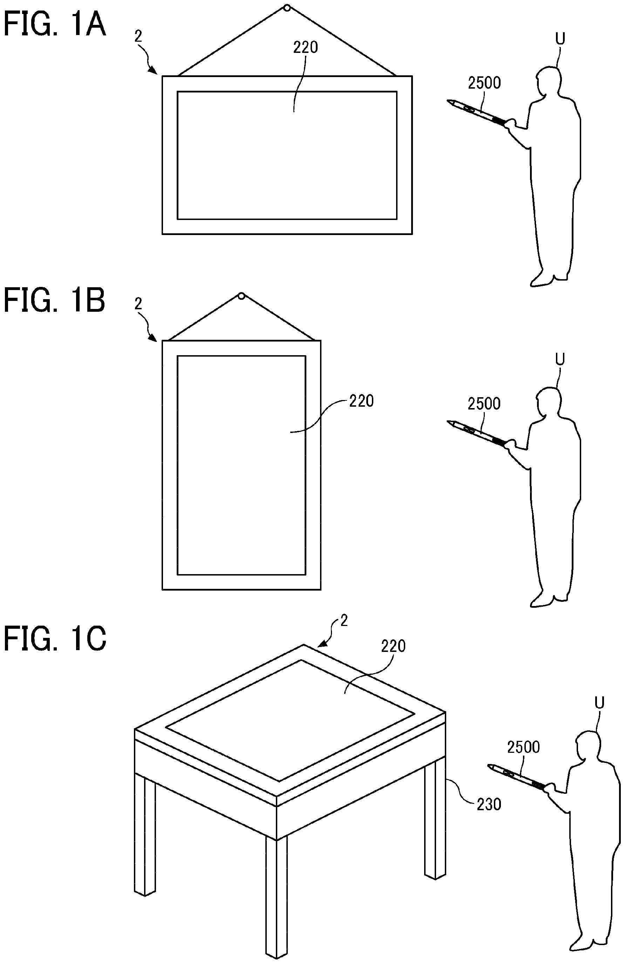

A description is given below of embodiments of the present disclosure, with reference to the attached drawings. FIGS. 1A, 1B, and 1C are diagrams each illustrating an overall configuration of a display apparatus according to a first embodiment. FIG. 1A illustrates, as an example of the display apparatus, a display apparatus 2 used as an electronic whiteboard having a landscape rectangular shape and being hung on a wall.

As illustrated in FIG. 1A, the display apparatus 2 includes a display 220 that is as an example of the display apparatus 2. A user performs, on the display 220 using a pen 2500, a user hand drafted input, such as handwriting to input characters or texts or drawing to input drawings, for example.

FIG. 1B illustrates the display apparatus 2 used as an electronic whiteboard having a portrait rectangular shape and being hung on a wall.

FIG. 1C illustrates the display apparatus 2 placed on the top of a desk 230. Since the display apparatus 2 has a thickness of about 1 centimeter, the desk 230 does not need to be adjusted when the display apparatus 2 is placed on the top of the desk 230, which is a general-purpose desk. The display apparatus 2 can be moved or transferred by users without difficulty.

Examples of an input method of coordinates by using the pen 2500 include an electromagnetic induction method and an active capacitive coupling method. In other example, the pen 2500 further has functions such as pen pressure detection, inclination detection, or a hover function (displaying a cursor before the pen is brought into contact).

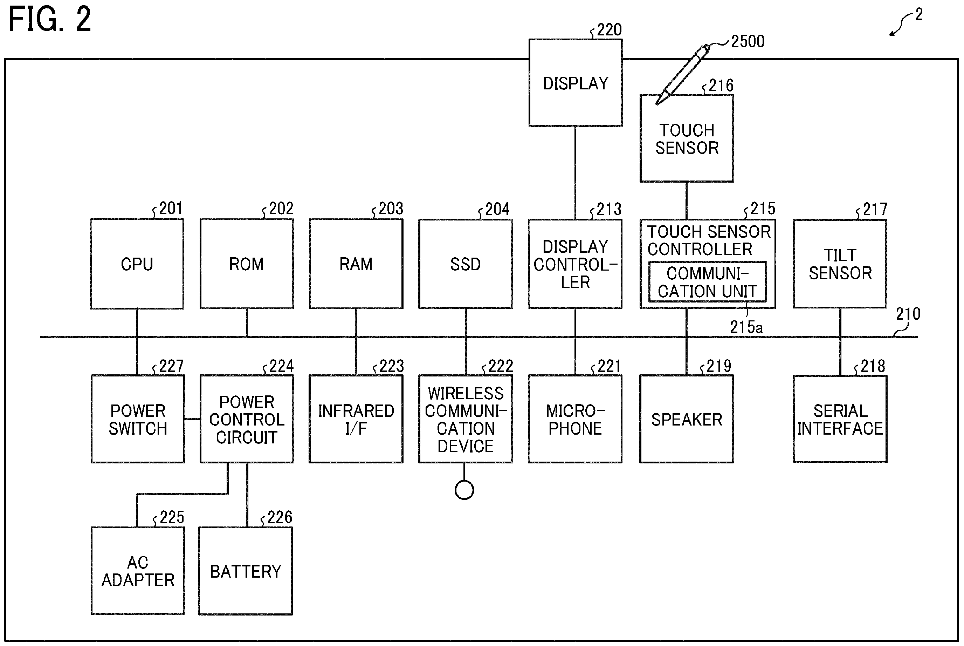

A description is given below of a hardware configuration of the display apparatus 2 according to the present embodiment, with reference to FIG. 2. FIG. 2 is a block diagram illustrating a hardware configuration of the display apparatus 2 according to the present embodiment.

The display apparatus 2 according to the present embodiment has a configuration of an information processing apparatus or a computer as illustrated in FIG. 2. As illustrated in FIG. 2, the display apparatus 2 includes a central processing unit (CPU) 201, a read only memory (ROM) 202, a random access memory (RAM) 203, and a solid state drive (SSD) 204.

The CPU 201 controls overall operation of the display apparatus 2. The ROM 202 stores a control program such as an initial program loader (IPL) to boot the CPU 201. The RAM 203 is used as a work area for the CPU 201.

The SSD 204 stores various data such as an operating system (OS) and a control program for display apparatuses. The program may be an application program that runs on an information processing apparatus equipped with a general-purpose OS such as WINDOWS, MAC OS, ANDROID, and IOS. In this case, the display apparatus 2 is usually used as a general-purpose information processing apparatus, however once a user executes the application program, a user hand drafted input is performable with the display apparatus 2 in substantially the same manner as to be performable with a dedicated display apparatus.

The display apparatus 2 further includes a display controller 213, a touch sensor controller 215, a touch sensor 216, the display 220, a power switch 227, a tilt sensor 217, a serial interface 218, a speaker 219, a microphone 221, a wireless communication device 222, an infrared interface (I/F) 223, a power control circuit 224, an alternating current (AC) adapter 225, and a battery 226.

The display controller 213 controls display of an image output to the display 220. The touch sensor 216 detects that the pen 2500, a user's hand or the like is brought into contact with the display 220. The pen or the user's hand is an example of input means or input device. The touch sensor 216 also receives a pen identifier (ID).

The touch sensor controller 215 controls processing of the touch sensor 216. The touch sensor 216 performs coordinate input and coordinate detection. More specifically, in a case of optical sensing, for inputting and detecting coordinates, the display 220 is provided with two light receiving and emitting devices disposed on both upper side ends of the display 220, and a reflector frame surrounding the sides of the display 220. The light receiving and emitting devices emit a plurality of infrared rays in parallel to a surface of the display 220. Light-receiving elements receive lights passing in the direction that is the same as an optical path of the emitted infrared rays, which are reflected by the reflector frame.

The touch sensor 216 outputs position information of the infrared ray that is blocked by an object after being emitted from the two light receiving and emitting devices, to the touch sensor controller 215. Based on the position information of the infrared ray, the touch sensor controller 215 detects a specific coordinate that is touched by the object. The touch sensor controller 215 further includes a communication unit 215a for wireless communication with the pen 2500. For example, when communication is performed in compliance with a standard such as BLUETOOTH, a commercially available pen can be used. When one or more pens 2500 are registered in the communication unit 215a in advance, the display apparatus 2 and the pen 2500 are communicably connected with each other without a user operation of setting for a connection between the pen 2500 and the display apparatus 2.

The power switch 227 turns on or off the power of the display apparatus 2. The tilt sensor 217 is a sensor that detects a tilt angle of the display apparatus 2. The tilt sensor 217 is mainly used to detect whether the display apparatus 2 is being used in any of the installation states of FIG. 1A, FIG. 1B or FIG. 1C. The thickness of characters or the like can be changed automatically based on the detected installation state.

The serial interface 218 is an interface to connect the display apparatus 2 to extraneous sources such as a universal serial bus (USB). The serial interface 218 is used to input information from extraneous sources. The speaker 219 is used to output sound, and the microphone 221 is used to input sound. The wireless communication device 222 communicates with a terminal carried by a user and relays the connection to the Internet, for example. The wireless communication device 222 performs communication in compliance with Wi-Fi, BLUETOOTH, or the like. Any suitable standard can be applied other than the Wi-Fi and BLUETOOTH. The wireless communication device 222 forms an access point. When a user sets a service set identifier (SSID) and a password that the user obtains in advance in the terminal carried by the user, the terminal is connected to the access point.

It is preferable that two access points are provided for the wireless communication device 222 as follows:
(a) Access point to the Internet; and (b) Access point to Intra-company network to the Internet. The access point (a) is for users other than, for example, company staffs. The access point (a) does not allow access from such users to the intra-company network but allow access to the Internet. The access point (b) is for intra-company users and allows such users to access the intra-company network and the Internet.

The infrared I/F 223 detects an adjacent display apparatus 2. The infrared I/F 223 detects an adjacent display apparatus 2 using the straightness of infrared rays. Preferably, one infrared I/F 223 is provided on each side of the display apparatus 2. This configuration allows the display apparatus 2 to detect a direction in which an adjacent display apparatus 2 is arranged. Such arrangement extends the screen. Accordingly, the user can instruct the adjacent display apparatus 2 to display a previous handwritten object. That is, one display 220 (screen) corresponds to one page, and the adjacent display 220 displays the handwritten object on a separate page.

The power control circuit 224 controls the AC adapter 225 and the battery 226, which are power supplies of the display apparatus 2. The AC adapter 225 converts alternating current shared by a commercial power supply into direct current.

In a case where the display 220 is a so-called electronic paper, little or no power is consumed to maintain display of an image, and the display apparatus 2 may be driven by the battery 226, accordingly. This allows the display apparatus 2 to be used as, for example, a digital signage that is also usable in a place, such as a place in the open air, where a power source is hardly secured.

The display apparatus 2 further includes a bus line 210. The bus line 210 is an address bus or a data bus, which electrically connects the components illustrated in FIG. 2 such as the CPU 201.

The touch sensor 216 is not limited to an optical type. In another example, the touch sensor 216 is a different type of detector or detection means, such as a capacitance touch panel that identifies a contact position by detecting a change in capacitance, a resistance film touch panel that identifies a contact position by detecting a change in voltage of two opposed resistance films, or an electromagnetic induction touch panel that identifies a contact position by detecting electromagnetic induction caused by contact of an object to a display. The touch sensor 216 can be a type that does not use an electronic pen to detect whether a pen tip is in contact with the surface of the display 220. In this case, a fingertip or a pen-shaped stick may be used for a touch operation. In addition, the pen 2500 may have any suitable shape other than a slim pen shape.

A description is given below of recognition of a figure in the display apparatus 2 according to the present embodiment. When a stroke data item, which is input by a user hand drafted input by using an input means or an input device satisfies a first condition that is determined in advance, the display apparatus 2 according to the present embodiment determines the stroke data item as a part of stroke data representing a figure. In the description of embodiments, stroke data item refers to stroke data representing an object corresponding to a single stroke drawing made by a user hand drafted input.

In addition, when another stroke data item that is input within a predetermined time period after the input of the stroke data item that is determined as the part of the figure, satisfies the first condition and a second condition that is determined in advance, the display apparatus 2 according to the present embodiment determines that each of the stroke data items included in the figure. The predetermined time period may be set by a user or a designer.

In other words, in the present embodiment, when the stroke data item input within a predetermined time period from a time of completion of the previous input of the stroke data item satisfying the first condition satisfies the first condition and the second condition, both of the stroke data items are recognized as ones belonging to a group forming a figure.

The display apparatus 2 according to the present embodiment recognizes the figure represented by the group of stroke data items and displays a list of possible figures as a result of recognition processing. In the description of embodiments, the group of stroke data items may be also referred to as a stroke data group. In the description of embodiments, a possible figure may be referred to as a predicted figure, or a candidate for a figure. A detailed description of a figure is given later.

The completion of the input of the stroke data item includes, for example, detection of a pen-up. "Pen-up" means that an input means, or an input device, having been in contact with a display (touch panel) is separated from the display (i.e., a pen lift event). "Pen-up" corresponds to disengaging a writing mode for inputting a stroke.

A series of user operations including engaging the writing mode, recording movement of an input means or an input device, or portion of a user, and then disengaging the writing mode is referred to as a stroke. The engaging of the writing mode may include, if desired, pressing an input means or an input device against a display or screen (display 220), and disengaging the writing mode may include releasing the input means or the input device from the display or screen (display 220).

In the description of embodiments, "Input means" or "Input device" refers to any means or device with which a user hand drafted input is performable by designating coordinates on a touch panel. Examples of the input means, or the input device, include, but are not limited to, a pen, a human finger, a human hand, and a bar-shaped member.

A stroke includes tracking movement of the portion of the user without contacting the display 220. In this case, the writing mode may be engaged or turned on by a gesture of a user, pressing a button by a hand or a foot of the user, or otherwise turning on the writing mode, for example using a pointing device such as a mouse.

The disengaging of the writing mode can be accomplished by the same or different gesture used to engage the writing mode, releasing the button, or otherwise turning off the writing mode, for example using the pointing device or mouse.

In the description of embodiments, "Stroke data" is data representing information displayed on the display 220 based on a trajectory of coordinates input with the input means, or the input device. The stroke data may be interpolated appropriately.

"Hand drafted data" refers to data having one or more stroke data items. "Hand drafted input" relates to a user input such as handwriting, drawing, and other forms of input. The hand drafted input may be performed via a touch interface, with a tactile object such as a pen or stylus or with the user's body. The hand drafted input may also be performed via other types of input, such as gesture-based input, hand motion tracking input or other touch-free input by a user. The following discussion may refer to handwriting input and handwriting data, but other forms of hand drafted input may be utilized and are within the scope of the present disclosure.

In the description of embodiments, "Object" refers to a displayed object that is an item displayed on the display 220 based on the stroke data. In the description of embodiments, "Object" represents an object of display.

More specifically, "Object" is a displayed object that is obtained as a result of performing recognition processing including handwriting recognition and hand drafted input recognition on the stroke data input to the display apparatus 2. The displayed object may be a stroke image represented by the stroke data. In addition, a displayed object obtained as a result of performing recognition processing including handwriting recognition and hand drafted input recognition on stroke data may be referred to as an object corresponding to the stroke data. The stroke data may be referred to as stroke data representing an object.

The object converted by recognition processing including handwriting recognition and hand drafted input recognition performed on the stroke data may include, in addition to character strings, a stamp of a given character or mark, such as one indicating "complete," and a figure, for example.

A detailed description of a figure is given below. In the description of embodiments, "Figure" includes various types of shape such as a circle, a polygon, and a star, straight lines, curved lines, and tables, for example. In other words, "Figure" in the following description includes an object recognized as a part of a character or recognized as one other than a character.

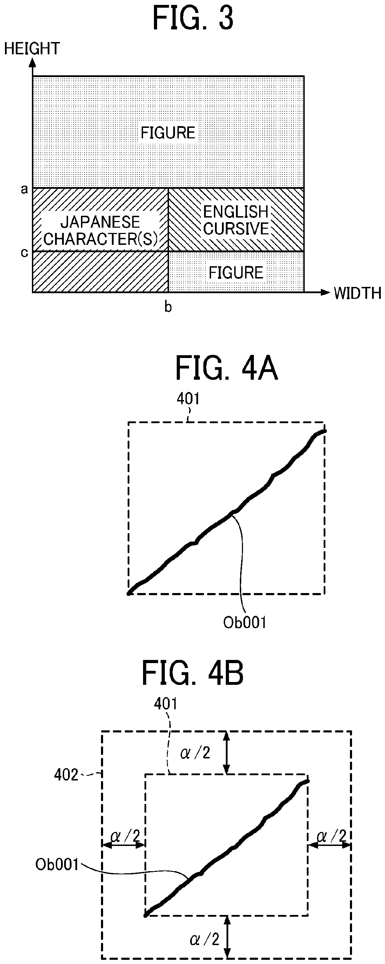

FIG. 3 is an illustration for describing the first condition according to the present embodiment.

In the present embodiment, the first condition is that a width and a height of a circumscribed rectangle circumscribing an object corresponding to a stroke data item, are within a predetermined range. In other words, the stroke data item satisfying the first condition is stroke data representing an object of which a corresponding circumscribed rectangle has the width and the height within predetermined ranges.

In FIG. 3, the horizontal axis represents a width of a circumscribed rectangle, and the perpendicular axis represents a height of the circumscribed rectangle. The display apparatus 2 according to the present embodiment recognizes an object of which a width and a height of the circumscribed rectangle is b or less and a or less, respectively, as a part of a Japanese character, for example.

The display apparatus 2 according to the present embodiment recognizes, as a part of English cursive, an object of which a width of the circumscribed rectangle is greater than b and a height of the circumscribed rectangle is greater than c and equal to or less than a.

As described above, in the present embodiment, a type of character represented by an input stroke data item is recognized based on a width and a height of a circumscribed rectangle of an object corresponding to the input stroke data item. Accordingly, such a type of character represented by input stroke data is recognized based on the width and the height of the circumscribed rectangle of the object corresponding to the input stroke data.

In the present embodiments, the first condition is that the height of the circumscribed rectangle is greater than a (first height threshold), or that the width of the circumscribed rectangle is greater than b (first width threshold), and the height is less than c (second height threshold). Then, the display apparatus 2 determines that the stroke data item satisfying the first condition is a part of a figure. In other words, the stroke data item satisfying the first condition is stroke data of which a corresponding object is recognized as a part of a character or one other than a character.

A description is given below of a circumscribed rectangle and a vicinity rectangle according to the present embodiment with reference to FIGS. 4A and 4B. FIGS. 4A and 4B are diagrams for describing a circumscribed rectangle and a vicinity rectangle, respectively, according to the present embodiment. FIG. 4A is a diagram for explaining a circumscribed rectangle, and FIG. 4B is a diagram for explaining a vicinity rectangle.

As illustrated in FIG. 4A, a circumscribed rectangle 401 is a rectangle that circumscribes an object Ob001 displayed on the display 220. The object Ob001 is a displayed object obtained as a result of performing recognition processing including handwriting recognition and hand drafted input recognition on a stroke data item corresponding to the object Ob001.

In the present embodiment, a vicinity rectangle 402 is a rectangle having a width and a height each of which is obtained by adding a fixed value α to a width and a height of the circumscribed rectangle 401. The fixed value α is set in advance. In other words, the vicinity rectangle of the object corresponding to the input stroke data is a rectangle determined based on the circumscribed rectangle of the object.

The fixed value α in the present embodiment may be determined based on, for example, a size of the display, the number of pixels, or a purpose of use, for example. In the present embodiment, for example, with respect to a character size that is assumed to be input by user hand drafted input performed by each of several users on a 40-inch display (the number of pixels is 2880 × 2160), the fixed value α may be set as 3 cm.

In this case, 1.5 cm that is equal to α/2, namely 3/2, is added to both of the sides of each of a width and a height of the circumscribed rectangle 401, namely the fixed value α in total is added to the width and the height of the circumscribed rectangle 401. In this case, when the circumscribed rectangle 401 has a width of 15 cm and a height of 13 cm, the vicinity rectangle 402 obtained by adding the fixed value α to the circumscribed rectangle 401 has a width of 18 cm and a height of 16 cm.

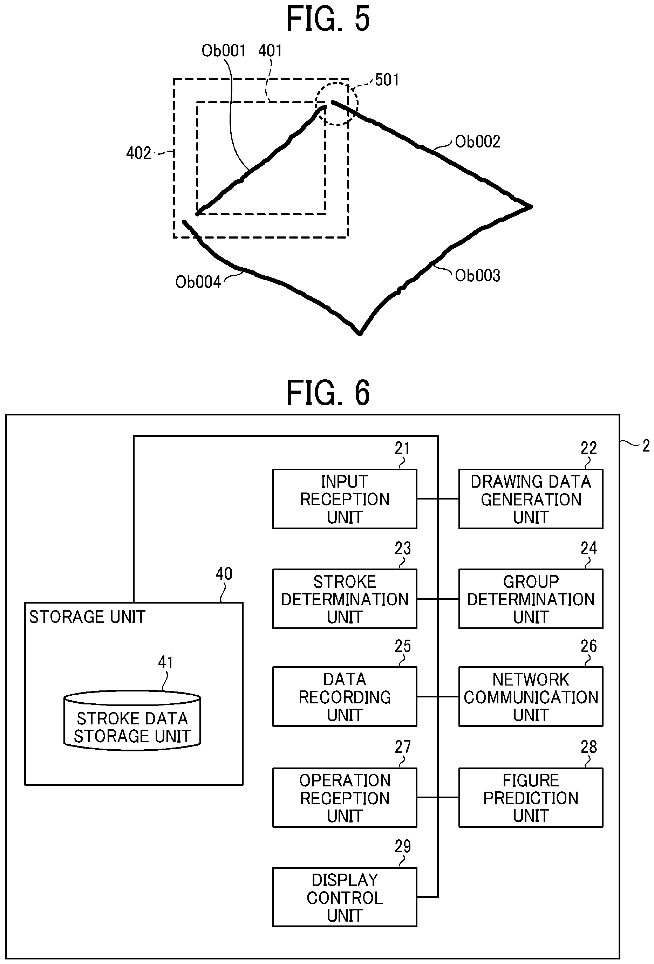

FIG. 5 is an illustration for describing the second condition according to the present embodiment.

In the present embodiment, when a stroke data item input within a predetermined time from completion of another input of another stroke data item satisfying the first condition satisfies the first condition and when an object corresponding to the stroke data item input within the predetermined time intersects with a vicinity rectangle of another object corresponding to the stroke data item input immediately before, the stroke data item input within the predetermined time is determined as being included in the same group as the stroke data item input immediately before.

In other words, the second condition is that an object corresponding to a stroke data item intersects with a vicinity rectangle of another object corresponding to another stroke data item input immediately before. More specifically, the second condition is that an object corresponding to a stroke data item input within a predetermined time after an input of another stroke data item satisfying the first condition intersects with a vicinity rectangle of an object corresponding to the stroke data item that satisfies the first condition.

In other words, the stroke data item satisfying the second condition is stroke data that is input within a predetermined time after an input of another stroke data item satisfying the first condition, and of which the corresponding object intersects with a vicinity rectangle of an object corresponding to the stroke data that satisfies the first condition.

In FIG. 5, immediately after an input of the stroke data item representing the object Ob001, a stroke data item representing an object Ob002 is input, and then a stroke data item representing an object Ob003 and a stroke data item representing an object Ob004 are input in this order.

The object Ob002 satisfies the first condition. The object Ob002 intersects with the vicinity rectangle 402 of the object Ob001 in an area 501. Accordingly, the object Ob002 satisfies the first condition and the second condition. Accordingly, the display apparatus 2 recognizes the object Ob001 and the object Ob002 as ones being belonging to one group.

In the example of FIG. 5, similarly, the object Ob002 and the object Ob003 are recognized as ones belonging to one group, and further, the object Ob003 and the object Ob004 are recognized as ones belonging to one group. In other words, in the example of FIG. 5, the stroke data representing the four objects that are the object Ob001 to the object Ob004 is recognized as a group of stroke data items forming a single figure.

The display apparatus 2 according to the present embodiment recognizes the figure based on the group of stroke data items, and displays on the display a list of candidates as a result of the recognition processing.

A description is given below of a functional configuration of the display apparatus 2 according to the present embodiment, with reference to FIG. 6. FIG. 6 is a block diagram illustrating an example of a functional configuration of the display apparatus 2 according to the first embodiment.

The display apparatus 2 includes an input reception unit 21, a drawing data generation unit 22, a stroke determination unit 23, a group determination unit 24, a data recording unit 25, a network communication unit 26, an operation reception unit 27, a figure prediction unit 28, and a display control unit 29. The functional units of the display apparatus 2 are implemented by or are caused to function by operation of any of the components illustrated in FIG. 3 according to an instruction from the CPU 201 according to a program loaded from the SSD 204 to the RAM 203.

The input reception unit 21 receives an input of stroke data (coordinate point sequence) by detecting coordinates of a position at which an input means, or an input device, such as the pen 2500 contacts the touch sensor 216. The drawing data generation unit 22 acquires coordinates of each position touched by the pen tip of the pen 2500 from the input reception unit 21.

The drawing data generation unit 22 connects a plurality of contact coordinates into a coordinate point sequence by interpolation, to generate stroke data.

The stroke determination unit 23 determines whether a stroke data item (hand drafted data) input by a user hand drafted input is stroke data representing at least a part of a figure. In other words, the stroke determination unit 23 determines whether an object corresponding to the stroke data item satisfies the first condition.

The group determination unit 24 determines whether the stroke data item currently input belongs to in the same group as another stroke data item input immediately before. In other words, the group determination unit 24 determines whether an object corresponding to the stroke data item satisfies the second condition.

The data recording unit 25 stores, for example, the stroke data input to the display apparatus 2 by a user hand drafted input, an object converted by recognition processing including handwriting recognition and hand drafted input recognition, a screen image of a personal computer (PC), and a file, in the storage unit 40. The network communication unit 26 connects to a network such as a local area network (LAN), and transmits and receives data to and from other devices via the network. The operation reception unit 27 receives various operations performed with respect to the display apparatus 2.

The figure prediction unit 28 predicts a figure, or a shape, for a drawn figure based on a plurality of stroke data items determined as multiple stroke data items that belong to a group by the group determination unit 24, and outputs a prediction result as predictive conversion candidates. In the description of embodiments, the predictive conversion candidates means predicted possible figure shapes for conversion.

Although various algorithms have been proposed for a method for predicting a figure, a detailed description is omitted on the assumption that known techniques can be used in the present embodiment.

The display control unit 29 causes the display 220 to display stroke data, an object converted from the stroke data by performing recognition processing including handwriting recognition and hand drafted input recognition, and an operation menu for a user to operate, for example. In addition, the display control unit 29 according to the present embodiment causes the display 220 to display the predictive conversion candidates that are output from the figure prediction unit 28.

The display apparatus 2 includes the storage unit 40 implemented by, for example, the SSD 204 or the RAM 203 illustrated in FIG. 3. The storage unit 40 includes a stroke data storage unit 41.

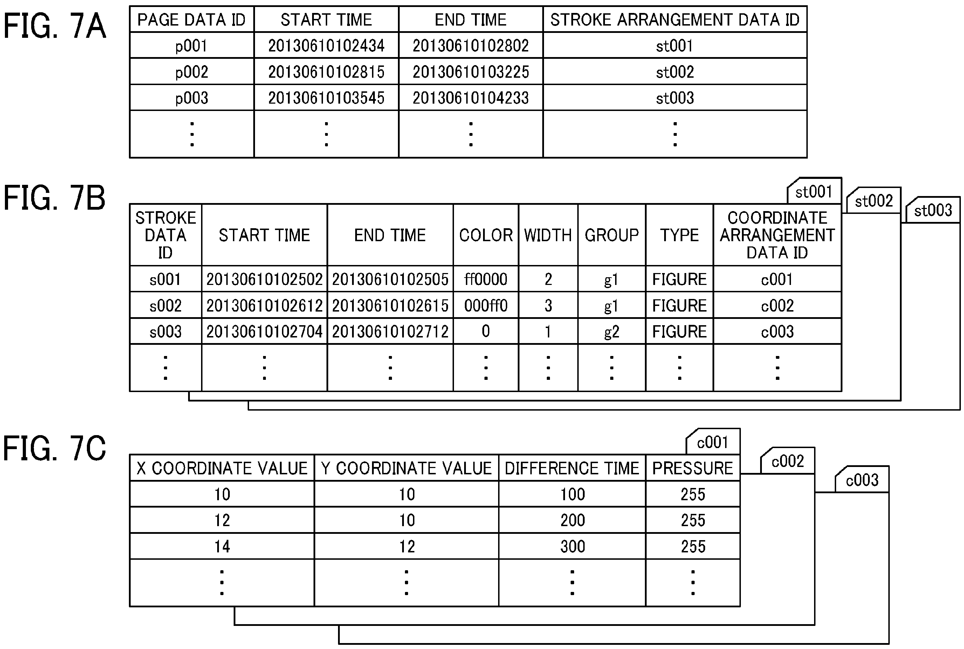

FIGS. 7A, 7B, and 7C are diagrams illustrating data related to stroke data stored in the stroke data storage unit 41.

FIG. 7A is a conceptual diagram illustrating a data structure of page data, according to the present embodiment.

Each record of the page data is data corresponding to a single page to be displayed on the display 220. As illustrated in FIG. 7A, the page data includes data items of page data ID for identifying a page, start time indicating when display of the page is started, end time indicating when hand drafted input to the page is stopped, and stroke arrangement data ID for identifying data on an arrangement of a stroke made by an input means, or an input device, in association with one another. In FIGS. 7A, 7B, and 7C, data items of text data, image data, and figure, obtained after character recognition are omitted.

The stroke arrangement data is to be used for displaying a stroke data item on the display 220. For example, when the user draws an alphabet "S" with an input means, or an input device, in one stroke, one stroke data ID is assigned to the alphabet "S" to be identified. When the user draws an alphabet "T" with an input means, or an input device, in two strokes, two stroke data IDs are assigned to the alphabet "T" to be identified.

The stroke arrangement data indicates detailed information as illustrated in FIG. 7B. FIG. 7B is a conceptual diagram illustrating a data structure of stroke arrangement data, according to the present embodiment. The stroke arrangement data corresponding to a stroke data arrangement ID includes a plurality of stroke data items. A record of stroke data item includes data items of stroke data ID for identifying a stroke data item, start time indicating when drawing of stroke starts, end time indicating when drawing of stroke ends, color of stroke, width of stroke, and coordinate arrangement data ID for identifying arrangement of points of stroke.

The group in the present embodiment is a group of stroke data items recognized as one object. The type indicates a type of group including the stroke data items. In the example of FIG. 7B, as the type of group including stroke data items is indicated as figure. In addition to the figure, the group types include Japanese character, number, English character, and English cursive. The figure may include, for example, a table.

The coordinate arrangement data includes detailed information as illustrated in FIG. 7C. FIG. 7C is a conceptual diagram illustrating a data structure of the coordinate arrangement data, according to the present embodiment. As illustrated in FIG. 7C, the coordinate arrangement data includes a single point (X coordinate value, Y coordinate value) on the display 220, difference time (milliseconds (ms)) indicating a difference between a start time of drawing of the stroke and a time at which the stroke passes that point, and pressure by the pen 2500 on that point. In other words, the stroke arrangement data corresponding to a single stroke arrangement data ID in FIG. 7B is a collection of points in FIG. 7C. For example, in a case in which the user draws the alphabet "S" with an input means, or an input device, in one stroke, the stroke passes a plurality of pass points, such that the coordinate arrangement data indicates information on the pass points.

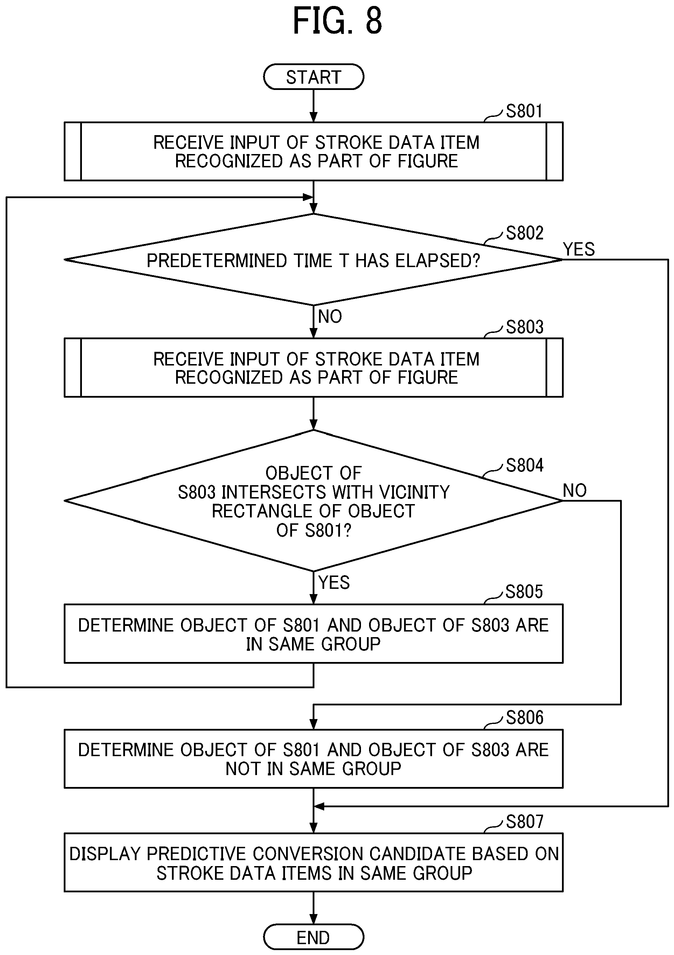

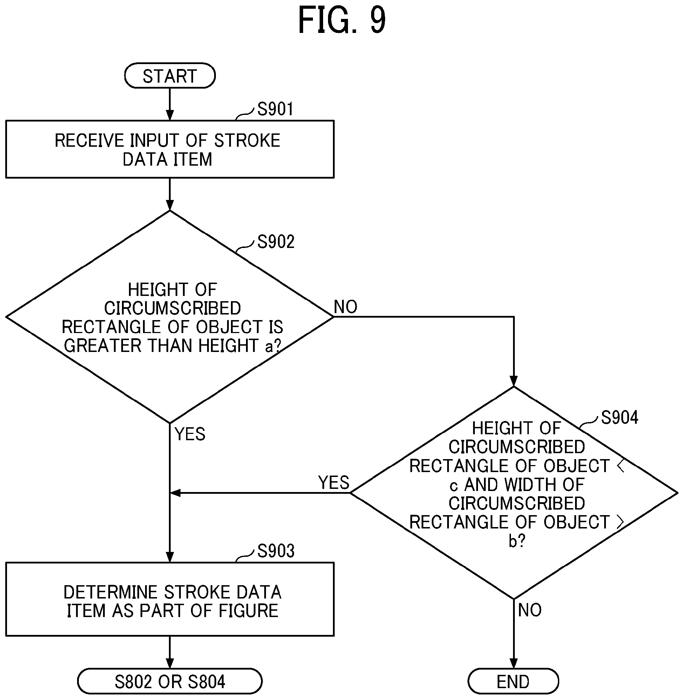

A description is given below of a process performed by the display apparatus 2 according to the present embodiment, with reference to FIGS. 8 and 9. FIG. 8 is a flowchart that is a first flowchart illustrating operation of the display apparatus 2 according to the first embodiment. The process of FIG. 8 is repeatedly executed while the display apparatus 2 is on.

The input reception unit 21 of the display apparatus 2 receives an input of stroke data item recognized as a part of a figure (S801). Details of processing of S801 is described later.

Subsequently, the stroke determination unit 23 determines whether a predetermined time T has elapsed since a pen-up operation is performed after the input of stroke data item (hand drafted input) in step S801 (step S802).

In step S802, when the predetermined time T has elapsed (Yes in step S802), the process performed by the display apparatus 2 proceeds to step S807, which is described later.

In step S802, when the predetermined time T has not elapsed (No in step S802), the input reception unit 21 receives an input of stroke data item recognized as a part of a figure (step S803). Details of processing of step S803 is described later.

Subsequently, the group determination unit 24 of the display apparatus 2 determines whether an object corresponding to the stroke data item input in step S803 intersects with a vicinity rectangle of an object corresponding to the stroke data item input in step S801 (step S804). In other words, the group determination unit 24 determines whether the stroke data item input in step S803 satisfies the second condition.

In step S804, when the object intersects the vicinity rectangle, the group determination unit 24 recognizes that the stroke data item input in step S801 and the stroke data item input in step S803 belong to the same group (step S805), and the process returns to step S802.

In step S804, when the object does not intersect with the vicinity rectangle, the display apparatus 2 recognizes that the stroke data input in step S801 is not in the same group as the stroke data input in step S803 (step S806). Subsequently, the figure prediction unit 28 of the display apparatus 2 predicts a figure, namely a shape, of a drawn figure based on a group of objects corresponding to the group of stroke data items in the same group. Then the display control unit 29 of the display apparatus 2 causes the display 220 to display predictive conversion candidates (step S807). In the description of embodiments, the group of objects may be referred to as an object group. Details of a display example of the predictive conversion candidates are described later.

A description of a process performed in each of step S801 and step S803 of FIG. 8 is given below with reference to FIG. 9. FIG. 9 is a flowchart that is a second flowchart illustrating a process performed by the display apparatus 2 according to the first embodiment. In the present embodiment, the process performed in step S801 in FIG. 8 is substantially the same as the process performed in step S803.

The input reception unit 21 detects coordinates touched by an input means, or an input device, the drawing data generation unit 22 generates a stroke data item, and the display control unit 29 causes the display 220 to display an object corresponding to the stroke data item, in the display apparatus 2 (step S901).

Subsequently, the stroke determination unit 23 of the display apparatus 2 determines whether a height of a circumscribed rectangle of the object corresponding to the stroke data item input in step S901 is greater than the height a (step S902). In other words, the stroke determination unit 23 determines whether the height of the circumscribed rectangle of the object corresponding to the stroke data item input in step S901 is greater than the first height value.

In step S902, when the height of the circumscribed rectangle is greater than the height a, the stroke determination unit 23 determines that the stroke data item input in step S901 satisfies the first condition and the corresponding object is a part of a figure (step S903), and the process proceeds to corresponding one of step S802 and step S803 in FIG. 8.

In step S902, when the height of the circumscribed rectangle is equal to or less than the height a, the stroke determination unit 23 determines whether the height of the circumscribed rectangle is less than the height c and whether a width of the circumscribed rectangle is greater than the height c (step S904). In other words, the stroke determination unit 23 determines whether the height of the circumscribed rectangle of the object corresponding to the stroke data item input in step S901 is greater than a second threshold and the width of the circumscribed rectangle is greater than a first threshold.

In step S904, when the circumscribed rectangle of the object corresponding to the stroke data item input in step S901 satisfies the above-described condition, the stroke determination unit 23 proceeds to step S903. In step S904, when the circumscribed rectangle does not satisfy the above-described condition, the display apparatus 2 ends the process.

As described above and as illustrated in FIG. 9, the display apparatus 2 performs the process of determining whether the input stroke data item satisfies the first condition.

In the present embodiment, when whether an input stroke data item satisfies the first condition or not is determined, a height and a width of a circumscribed rectangle of an object corresponding to the input stroke data item are used, but no limitation is indicated thereby.

In the present embodiment, for example, when whether the stroke data item satisfies the first condition or not is determined, a height and a width of a first rectangle obtained based on an object corresponding to the stroke data item may be used.

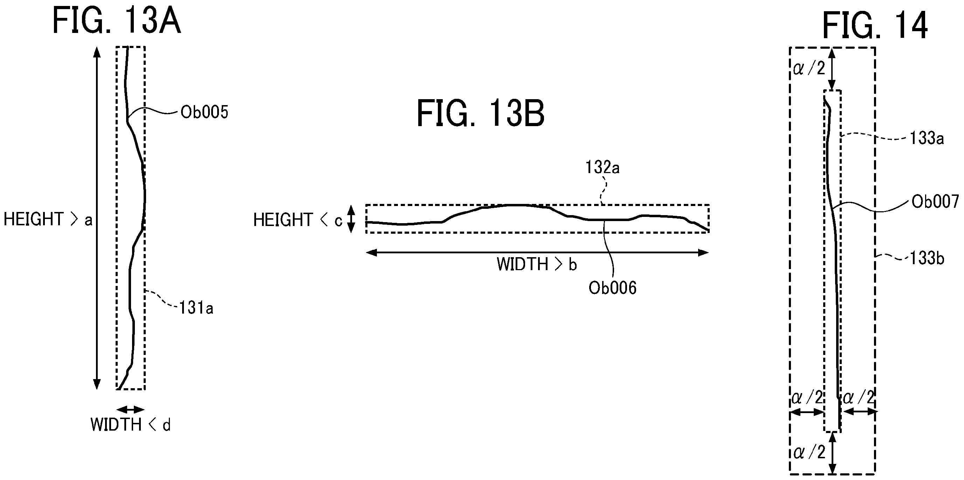

The first rectangle obtained based on the object may be a rectangle obtained by adding a preset fixed value to each of the height and the width of the circumscribed rectangle of the object, or may be a rectangle including the circumscribed rectangle of the object. The value to be added may be, for example, a value less than the fixed value α (see FIGS. 4 and 14). In addition, the first rectangle may be a rectangle obtained by subtracting a preset fixed value from each of the height and the width of the circumscribed rectangle of the object.

In other words, the first condition in the present embodiment is that the height of the first rectangle obtained based on the object corresponding to the stroke data item is greater than the first height threshold, or the height of the first rectangle is less than the second height threshold and the width of the first rectangle is greater than the width threshold.

In the present embodiment, when whether an input stroke data item satisfies the second condition or not is determined, a vicinity rectangle obtained based on a circumscribed rectangle of an object corresponding to the input stroke data item is used, but no limitation is indicated thereby.

In the present embodiment, a second rectangle obtained based on the first rectangle may be used as a vicinity rectangle when whether the second condition is satisfied or not is determined.

The second rectangle is a rectangle obtained by adding a preset fixed value to each of the height and the width of the first rectangle, and includes the first rectangle.

In other words, in the present embodiment, the second condition is that an object corresponding to a stroke data item input within the predetermined time after an input of another stroke data item satisfying the first condition intersects with the second rectangle including the first rectangle of an object corresponding to the stroke data item that satisfies the first condition.

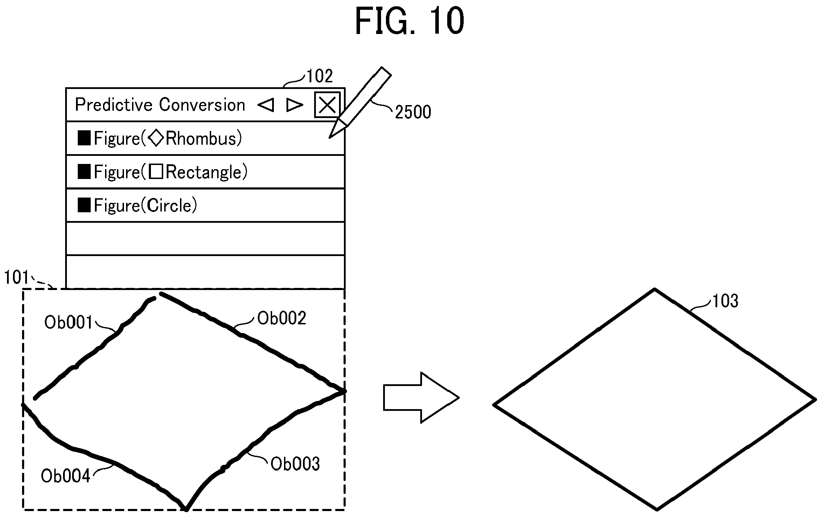

A description is given below of a display example of predictive conversion candidates with reference to FIG. 10. FIG. 10 is a diagram illustrating an example of display of predictive conversion candidates for a figure according to the present embodiment.

In the example illustrated in FIG. 10, a case that the stroke data item representing the object Ob001 to the stroke data item representing the object Ob004 (Ob001, Ob002, Ob003, and Ob004) are determined to as one group is illustrated.

In this case, the figure prediction unit 28 of the display apparatus 2 predicts a figure, or a figure shape, indicated by the stroke data group on the basis of the stroke data group, which is determined as one group. Specifically, the figure prediction unit 28 predicts a candidate for the figure drawn in the circumscribed rectangle 101 of an object group corresponding to the stroke data group, which is determined as one group. Then, the display control unit 29 of the display apparatus 2 displays the predictive conversion candidates in the vicinity of the circumscribed rectangle 101 as a list 102 of predictive conversion candidates.

When a figure is selected from the list 102, the display apparatus 2 deletes the objects drawn in the circumscribed rectangle 101 and displays an image 103 corresponding to the selected figure.

In the example of FIG. 10, "Rhombus" is selected from the list 102 by the pen 2500.

Accordingly, the display control unit 29 deletes the objects Ob001 to the object Ob004 in the circumscribed rectangle 101, and draws the image 103 of rhombus in the circumscribed rectangle 101.

In the present embodiment, as described above, when a group of stroke data items is recognized as at least a part of a figure, one or more figures, or figure shapes, are predicted based on the stroke data items included in the group, and a list of predictive conversion candidates is displayed.

Accordingly, in the present embodiment, when a figure is input by hand drafted input, a complicated operation such as switching from a state in which character recognition is performed (character recognition mode) to a state in which figure recognition is performed (figure recognition mode) is unnecessary. In addition, in the present embodiment, a list of predictive conversion candidates for a figure are displayed based on the stroke data items input by hand drafted input, and a figure selected from the list of predictive conversion candidates is displayed. The display apparatus according to the present embodiment prevents erroneous conversion into a figure that is not intended by the user and outputs a figure that is intended by the user.

### Second Embodiment:

A description is given below of a second embodiment of the present disclosure with reference to the corresponding drawings. The second embodiment is different from the first embodiment in that a server apparatus connected to the display apparatus 2 predicts one or more figures and outputs predictive conversion candidates. In the following description of the second embodiment, the difference from the first embodiment is focused on. In the following description, the same reference numerals are given to the same or corresponding functions or configurations as those of the first embodiment, and the redundant descriptions are omitted or simplified appropriately.

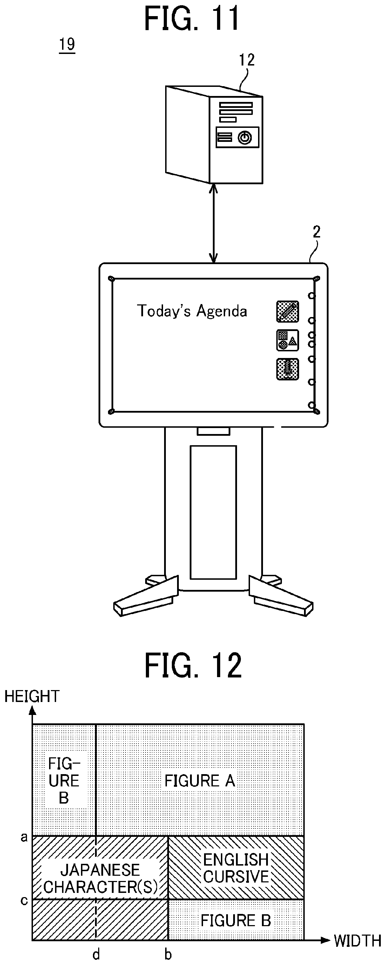

FIG. 11 is a diagram illustrating an example of a system configuration of a display system according to the second embodiment of the present disclosure. In a display system 19 according to the present embodiment, the display apparatus 2 and a server apparatus 12 are connected to each other via a network such as the Internet.

In case of the display system 19, the display apparatus 2 includes the input reception unit 21, the drawing data generation unit 22, the network communication unit 26, the operation reception unit 27, and the display control unit 29, which are illustrated in FIG. 6.

The server apparatus 12 includes the stroke determination unit 23, the group determination unit 24, the data recording unit 25, the figure prediction unit 28, and a network communication unit.

The network communication unit 26 of the display apparatus 2 transmits the stroke data to the server apparatus 12. The server apparatus 12 performs the processes illustrated by the flowcharts of FIGS. 8 and 9, and transmits the predictive conversion candidates to the display apparatus 2.

### Third embodiment:

A description is given below of a third embodiment of the present disclosure with reference to the corresponding drawings. The third embodiment is different from the first embodiment in that a table included in a figure is recognized. In the following description of the third embodiment, the difference from the first embodiment is focused on. In the following description, the same reference numerals are given to the same or corresponding functions or configurations as those of the first embodiment, and the redundant descriptions are omitted or simplified appropriately.

In the present embodiment, a third condition and a fourth condition are set for determining whether an object group corresponding to a stroke data group set as one group of stroke data items is a table or not.

In the present embodiment, when the object group corresponding to the stroke data group set as the one group satisfies the third condition and the fourth condition, a figure indicated by the object group is recognized as a table, and a possible table format is predicted. In the description of embodiments, the possible table format may be referred to as a candidate for a format of a table or a candidate for a table format.

In the present embodiment, as described above, by recognizing a table based on a plurality of input stroke data items, a table format intended by the user can be displayed.

FIG. 12 is an illustration for describing the third condition according to the present embodiment. The third condition of the present embodiment is that two or more stroke data items each representing an object of which a width and a height of a circumscribed rectangle are within predetermined ranges determined in advance are in the same group, and three or more stroke data items are included in the same group.

In other words, the third condition is that there are two or more stroke data items each representing an object having a circumscribed rectangle having a width and a height within the predetermined ranges, in the same group that includes three or more stroke data items.

The ranges of the width and the height of the circumscribed rectangle of the object in the third condition is described below.

In the present embodiment, a second width threshold d is set for a width of a circumscribed rectangle of an object. A predetermined range of size of the circumscribed rectangle of the object in the third condition is defined as the following two ranges, and these ranges are expressed as a range of figure B.
- A range in which the height is greater than a (first height threshold) and the width is equal to or less than d (second width threshold).
- A range in which the height is less than c (second height threshold) and the width is greater than b (first width threshold).

The case where the range of circumscribed rectangle of the object is the range of figure B is, for example, a case where an object corresponding to a stroke data item is a line in a vertical direction or a line in a horizontal direction.

In other words, an object of which the circumscribed rectangle has the range of figure B is an object that can be a part of a table.

In addition, in the following description, a range having a height greater than a and a width greater than d is defined as a range of figure A. An object of which the circumscribed rectangle is within the range of figure A is an object that can be a part of a figure other than a table.

In the following description of the present embodiment, with reference to FIGS. 13A, 13B and 14, a circumscribed rectangle and a vicinity rectangle of an object having a range of the circumscribed rectangle being the range of figure B. FIGS. 13A and 13B are illustrations for describing a circumscribed rectangle according to the third embodiment.

As illustrated in FIG. 13A, a circumscribed rectangle 131a is a rectangle that circumscribes an object Ob005 displayed on the display 220. The object Ob005 is a displayed object that is obtained as a result of performing recognition processing including handwriting recognition and hand drafted input recognition on a stroke data item corresponding to the object Ob005.

As illustrated in FIG. 13B, a circumscribed rectangle 132a is a rectangle that circumscribes an object Ob006 displayed on the display 220. The object Ob006 is a displayed object that is obtained as a result of performing recognition processing including handwriting recognition and hand drafted input recognition on a stroke data item corresponding to the object Ob006.

The circumscribed rectangle 131a has a height greater than a (first height threshold) and a width less than or equal to d (second width threshold). In addition, the circumscribed rectangle 132a has a height less than c (second height threshold) and a width less than b (first width threshold).

A description is given below of a vicinity rectangle of an object with reference to FIG. 14. FIG. 14 is an illustration for describing a vicinity rectangle according to the third embodiment.

In FIG. 14, a circumscribed rectangle 133a and a vicinity rectangle 133b of an object Ob007 are illustrated. The vicinity rectangle 133b of the object Ob007 is a rectangle obtained by adding the fixed value α that is set in advance to each of the width and the height of the circumscribed rectangle 133a of the object Ob007.

The fixed value α in the present embodiment may be determined based on, for example, a size of the display 220, the number of pixels, or a purpose of use, for example. In the present embodiment, for example, with respect to a character size that is assumed to be input by user hand drafted input performed by each of several users on a 40-inch display (the number of pixels is 2880 × 2160), the fixed value α may be set as 3 cm.

In this case, 1.5 cm that is equal to α/2, namely 3/2, is added to both of the sides of each of a width and a height of the circumscribed rectangle 133a, namely the fixed value α in total is added to the width and the height of the circumscribed rectangle 133a.

In this case, when the circumscribed rectangle 133a has a width of 5 cm and a height of 13 cm, the vicinity rectangle 133b obtained by adding the fixed value α to the circumscribed rectangle 133a has a width of 8 cm and a height of 16 cm.

In the present embodiment, with respect to the objects Ob005 and Ob006, a vicinity rectangle of each of the object Ob005 and the object Ob006 is obtained in substantially the same manner, namely by adding the fixed value α to each of the height and the width of the corresponding one of the circumscribed rectangles 131a and 132a.

As described above, the third condition of the present embodiment is that an object group corresponding to a group of stroke data items determined as the same group includes two or more objects each having a circumscribed rectangle having a width and a height within predetermined ranges and also includes three or more objects.

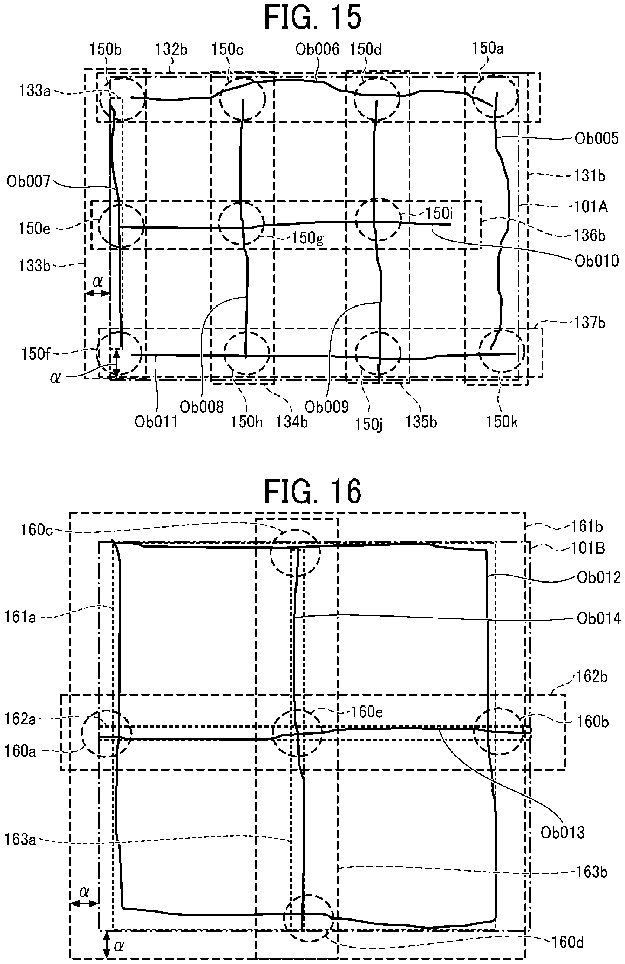

A description is given below of the fourth condition with reference to FIGS. 15 and 16. The fourth condition in the present embodiment is:
- Among objects included in an object group satisfying the third condition, a first object intersects with a circumscribed rectangle of a second object.
- The height of a circumscribed rectangle of an object group corresponding to the stroke data group in the same group is greater than a (first height threshold), or the width of a circumscribed rectangle of the object group is greater than b (first width threshold) and the height of the circumscribed rectangle of the object group is less than c (second height threshold).

In other words, the fourth condition is that the objects included in the object group satisfying the third condition has the corresponding vicinity rectangles that intersect with each other, and the size of the circumscribed rectangle of the object group is a size that is within the range of figure A or the range of figure B. The range of figure B is a first range that is determined in advance, and the range of figure A is a second range that is determined in advance.

FIG. 15 is a diagram illustrating an example of the fourth condition according to the present embodiment. In FIG. 15, immediately after an input of the stroke data item representing the object Ob005, the stroke data item representing the object Ob006 is input, and then the stroke data item representing the object Ob007 is input.

In addition, in FIG. 15, immediately after the input of the stroke data item representing the object Ob007, a stroke data item representing an object Ob008, a stroke data item representing an object Ob009, a stroke data item representing an object Ob010, and a stroke data item representing an object Ob011 are sequentially input in this order, and each input of stroke data items is performed within a predetermined time after the one previous input of stroke data item. In FIG. 15, it is assumed that the stroke data items belong to the same group.

In FIG. 15, a vicinity rectangle 131b is a vicinity rectangle of the object Ob005, a vicinity rectangle 132b is a vicinity rectangle of the object Ob006, and a vicinity rectangle 133b is a vicinity rectangle of the object Ob007. In addition, in FIG. 15, a vicinity rectangle 134b is a vicinity rectangle of the object Ob008, and a vicinity rectangle 135b is a vicinity rectangle of the object Ob009. In addition, in FIG. 15, a vicinity rectangle 136b is a vicinity rectangle of the object Ob010, and a vicinity rectangle 137b is a vicinity rectangle of the object Ob011.

The vicinity rectangle 131b of the object Ob005 intersects with the object Ob006 in an area 150a. The vicinity rectangle Ob006 of the vicinity rectangle 132b intersects with the object Ob007 in an area 150b, intersects with the object Ob008 in an area 150c, and intersects with the object Ob009 in an area 150d.

The vicinity rectangle 133b of the object Ob007 intersects with the object Ob010 and the object Ob011 in an area 150e and an area 150f, respectively. The vicinity rectangle 134b of the object Ob008 intersects with the object Ob010 and the object Ob011 in an area 150g and an area 150h, respectively.

The vicinity rectangle 135b of the object Ob009 intersects with the object Ob010 in an area 150i, and intersects with the object Ob011 in an area 150j. The vicinity rectangle 137b of the object Ob010 intersects with the object Ob005 in an area 150k.

In addition, with respect to a size of a circumscribed rectangle 101A of an object group including the object Ob005 to the objects Ob011 illustrated in FIG. 15, the height is greater than a (first height threshold), and the width is greater than b (first width threshold). In other words, the size of the circumscribed rectangle 101A is in the range of figure A.

In the example of FIG. 15, each size of the vicinity rectangles 131b, 133b, 134b, and 135b is in a range in which the height is greater than a (first height threshold) and the width is less than or equal to d (second width threshold). In addition, each size of the vicinity rectangles 132b, 136b, and 137b is in a range in which the height is less than c (second height threshold) and the width is greater than b (first width threshold).

In other words, all of the objects Ob005 to Ob011 illustrated in FIG. 15 are objects of each of which the vicinity rectangle has a size within the range of figure B.

Accordingly, the object group including the objects Ob005 to Ob011 illustrated in FIG. 15 includes two or more objects of each of which the vicinity rectangle has the width and height within the predetermined range, and the object group also includes three or more objects. In other words, the object group including the objects Ob005 to Ob011 satisfies the third condition.

In addition, the object group including the objects Ob005 to Ob011 illustrated in FIG. 15 satisfies the fourth condition, because each of the objects included in the object group satisfying the third condition intersects with one or more vicinity rectangles of another one or more of the objects, and the circumscribed rectangle 101A of the object group is a size that is within the range of figure A or the range of figure B.

Accordingly, in the present embodiment, a figure indicated by the object group including the objects Ob005 to Ob011 illustrated in FIG. 15 is recognized as a table, and a candidate for a table format is predicted.

FIG. 16 is a diagram illustrating another example of the fourth condition according to the present embodiment. In the example of FIG. 16, immediately after an input of a stroke data item representing an object Ob012, a stroke data item representing an object Ob013 is input, and then a stroke data item representing an object Ob014 is input.

In addition, in FIG. 16, immediately after the input of the stroke data item representing the object Ob012, the stroke data item representing the object Ob013 and the stroke data item representing the object Ob014 are sequentially input in this order, and each input of the stroke data items is performed within a predetermined time after the one previous input of stroke data item.

In FIG. 16, it is assumed that the stroke data items belong to the same group.

In FIG. 16, a circumscribed rectangle 161a is a circumscribed rectangle of the object Ob012, and a vicinity rectangle 161b is a vicinity rectangle of the object Ob012. Further, a circumscribed rectangle 162a is a circumscribed rectangle of the object Ob013, and a vicinity rectangle 162b is a vicinity rectangle of the object Ob013. Further, a circumscribed rectangle 163a is a circumscribed rectangle of the object Ob014, and a vicinity rectangle 163b is a vicinity rectangle of the object Ob014.

The vicinity rectangle 161b of the object Ob012 intersects with the object Ob013 in areas 160a and 160b. The vicinity rectangle 161b of the object Ob012 intersects with the object Ob014 in areas 160c and 160d. The vicinity rectangle 162b of the object Ob013 intersects with the object Ob014 in an area 160e.

In addition, with respect to a size of a circumscribed rectangle 101B of an object group including the object Ob012 to the objects Ob014 illustrated in FIG. 16, the height is greater than a (first height threshold), and the width is greater than b (first width threshold). In other words, the size of the circumscribed rectangle 101B is in the range of figure A.

In the example of FIG. 16, the size of the vicinity rectangle 161b is in a range in which the height is greater than a (first height threshold) and the width is greater than b (first width threshold).

In the example of FIG. 16, the size of the vicinity rectangle 162b is in a range in which the height is less than c (second height threshold) and the width is greater than b (first width threshold). In addition, the size of the vicinity rectangle 163b is in a range in which the height is greater than a (first height threshold) and the width is less than d (second width threshold).

In other words, each of the size of the vicinity rectangle 162b of the object Ob013 and the size of the vicinity rectangle 163b of the object Ob014 is within the range of figure B.

As described above, the object group including the objects Ob012 to Ob014 illustrated in FIG. 16 includes two or more objects each of which has a vicinity rectangle within the range of figure B, and also includes three or more objects. Accordingly, the object group including the objects Ob012 to Ob014 satisfies the third condition.

In addition, the object group including the objects Ob012 to Ob014 illustrated in FIG. 16 satisfies the fourth condition, because the objects included in the object group satisfying the third condition intersect with one or more vicinity rectangles of another one or more of the objects, and the circumscribed rectangle 101B of the object group is a size that is within the range of figure A or the range of figure B.

Accordingly, in the present embodiment, a figure indicated by the object group including the objects Ob012 to Ob014 illustrated in FIG. 16 is recognized as a table, and a candidate for a table format is predicted.

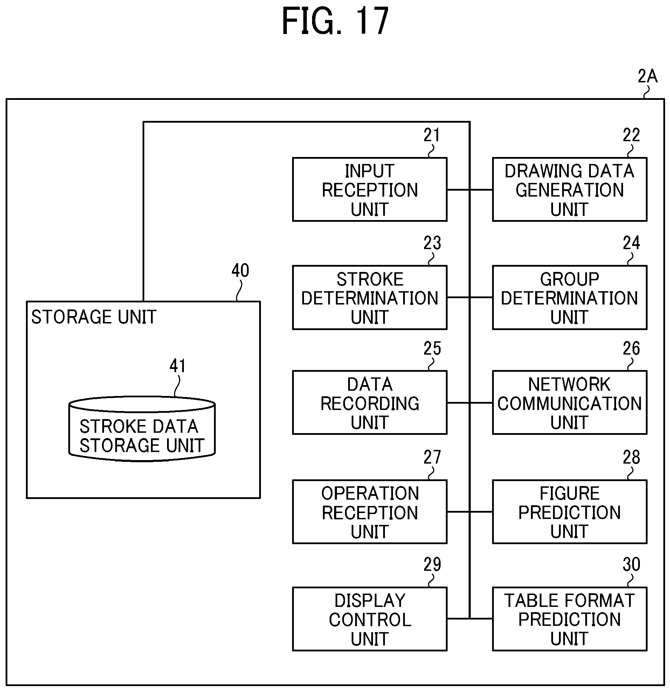

A description is given below of functions of the display apparatus according to the present embodiment, with reference to FIG. 17. FIG. 17 is a block diagram illustrating an example of a functional configuration of a display apparatus 2A according to the third embodiment.

The display apparatus 2A includes the input reception unit 21, the drawing data generation unit 22, the stroke determination unit 23, the group determination unit 24, the data recording unit 25, the network communication unit 26, the operation reception unit 27, the figure prediction unit 28, the display control unit 29, and a table format prediction unit 30.

The table format prediction unit 30 according to the present embodiment determines whether an object group corresponding to a plurality of stroke data items (stroke data group) determined as one group by the group determination unit 24 satisfies the third condition and the fourth condition or not. When the object group satisfies the third condition and the fourth condition, the table format prediction unit 30 determines that the drawn figure is a table, predicts a format of the table, and outputs a prediction result as a predictive conversion candidate.

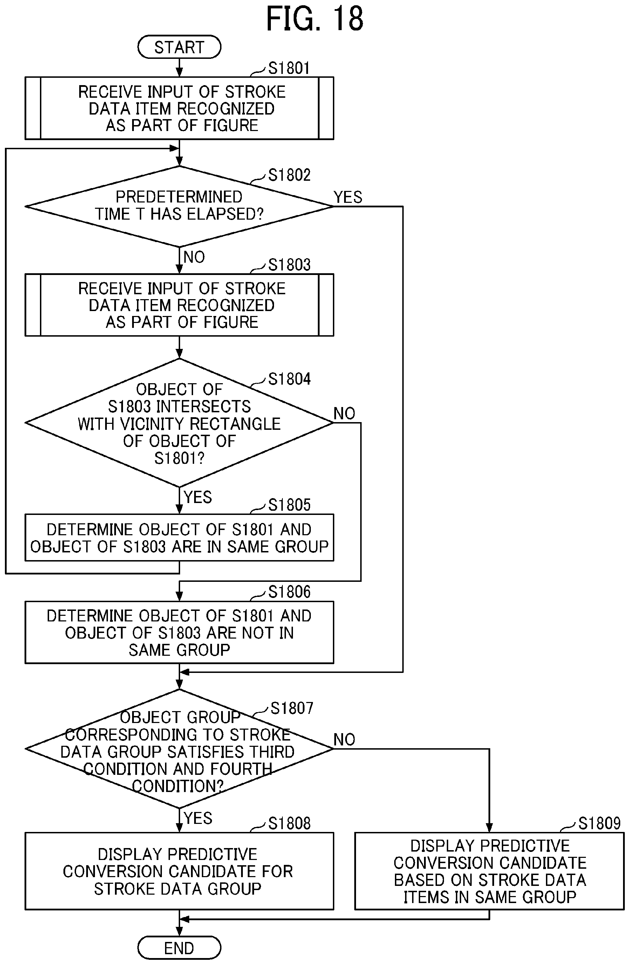

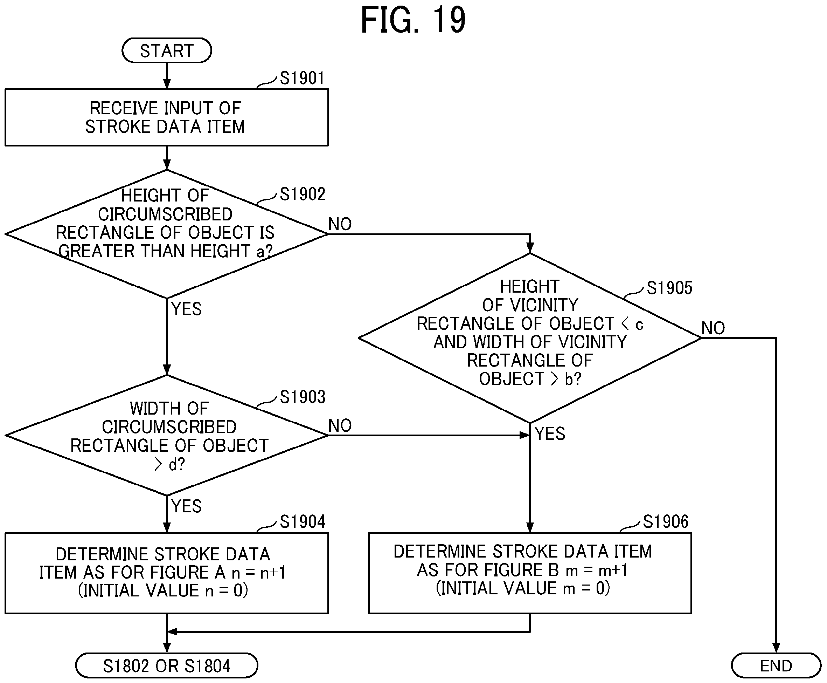

A description is given below of a process performed by the display apparatus 2A according to the present embodiment, with reference to FIGS. 18 and 19. FIG. 18 is a flowchart that is a first flowchart illustrating a process performed by the display apparatus according to the third embodiment. The process illustrated in FIG. 18 is repeatedly performed while the display apparatus 2A is on.

Processing of S1801 to S1806 illustrated in FIG. 18 is substantially the same as the processing of S801 to S806 illustrated in FIG. 8, and the description of the processing of S1801 to S1806 illustrated in FIG. 18 is omitted here.

In case that the predetermined time T has elapsed in step S1802 (Yes in step S 1802), or subsequent to step S 1806, the display apparatus 2A determines, by the table format prediction unit 30, whether the object group corresponding to the stroke data group determined as the same group by the group determination unit 24 satisfies the third condition and the fourth condition (step S1807).

In case that the object group satisfies the third condition and the fourth condition in step S 1807, the display apparatus 2A causes the table format prediction unit 30 to predict a format of the drawn table based on the object group, and the display control unit 29 causes the display 220 to display a predictive conversion candidate (step S 1808).

In case that the object group does not satisfy the third condition or the fourth condition in step S 1807, the display apparatus 2A causes the figure prediction unit 28 to predict a figure of the drawn figure based on the object group, and the display control unit 29 causes the display 220 to display a predictive conversion candidate (step S 1809).

A description of a process performed in each of step S1801 and step S1803 of FIG. 18 is given below with reference to FIG. 19. FIG. 19 is a flowchart that is a second flowchart illustrating a process performed by the display apparatus according to the third embodiment. In the present embodiment, the process performed in step S1801 in FIG. 18 is substantially the same as the process performed in step S1803.

Processing of step S1901 and step S1902 in FIG. 19 is substantially the same as the processing of step S901 and step S902 in FIG. 9, and the redundant description is omitted here.

In step S1902, when the height of the circumscribed rectangle of the object is greater than the height a (first height threshold), the stroke determination unit 23 determines whether the width of the circumscribed rectangle of the object is greater than the width d (second width threshold) (step S1903).

In step S1903, when the width of the circumscribed rectangle of the object is greater than the width d (second width threshold), recognition processing including handwriting recognition and hand drafted input recognition on the stroke data item corresponding to the object that is an object within the range of figure A is performed (step S1904), and the process proceeds to step S1802 or step S1804 in FIG. 18. At this time, the stroke determination unit 23 sets the number of stroke data items in the range of figure A to n, and increments the value of n to set n = n + 1. Note that the initial value of n is 0.

In step S1902, when the height of the circumscribed rectangle of the object is equal to or less than the height a (first height threshold), the stroke determination unit 23 determines whether the height of the circumscribed rectangle of the object is less than the height c (second height threshold) and the width of the circumscribed rectangle of the object is greater than the width b (first width threshold) (step S1905).

In step S1905, when the height of the circumscribed rectangle of the object is less than the height c and the width is greater than the width b, the stroke determination unit 23 performs recognition processing including handwriting recognition and hand drafted input recognition on the stroke data item corresponding to the object that is an object within the range of figure B (step S1906), and the process proceeds to step S1802 or step S1804 in FIG. 18. At this time, the stroke determination unit 23 sets the number of stroke data items in the range of figure B to m, and increments the value of m to set m = m + 1. Note that the initial value of m is 0.

In step S1905, when the circumscribed rectangle of the object does not satisfy the condition that the height is less than the height c and the width is greater than the width b, the stroke determination unit 23 ends the process.

The values of n and m in the present embodiment may be referred to when whether the object group satisfies the third condition or not is determined in step S1807 in FIG. 18. In this case, with respect to the objects included in the same group, if the value of m corresponding to the number of objects each being within the range of figure B is 2 or more, and the value of n + m that is a sum of the number of objects each being within the range of figure A and the number of objects each being within the range of figure B is 3 or more, the object group satisfies the third condition.

In the present embodiment, when whether the object group corresponding to the stroke data group of which the stroke data items are determined as the same group satisfies the third condition or not is determined, the first rectangle obtained based on each of the objects may be used in alternative to the circumscribed rectangle of each of the objects.

In other words, the third condition according to the present embodiment is that two or more stroke data items each having the first rectangle that is obtained based on the corresponding object and of which the height and the width are within the first range present, and the number of stroked data items included in the group is three or more.

In the present embodiment, when whether the object group corresponding to the stroke data group of which the stroke data items are determined as the same group satisfies the fourth condition or not is determined, the second rectangle including the first rectangle of each of the objects may be used in alternative to the vicinity rectangle of each of the objects.

In other words, the fourth condition of the embodiment is that one of the objects included in the plurality of objects satisfying the third condition intersects within the second rectangle including the first rectangle of another one of objects, and a size of the first rectangle of each of the plurality of objects is within the first range or the second range determined in advance.

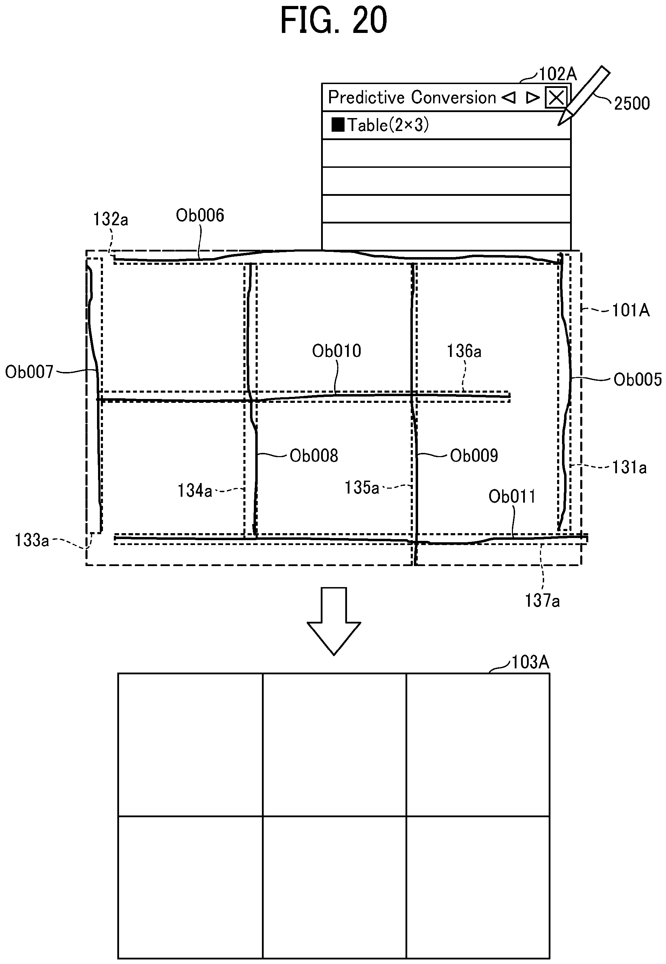

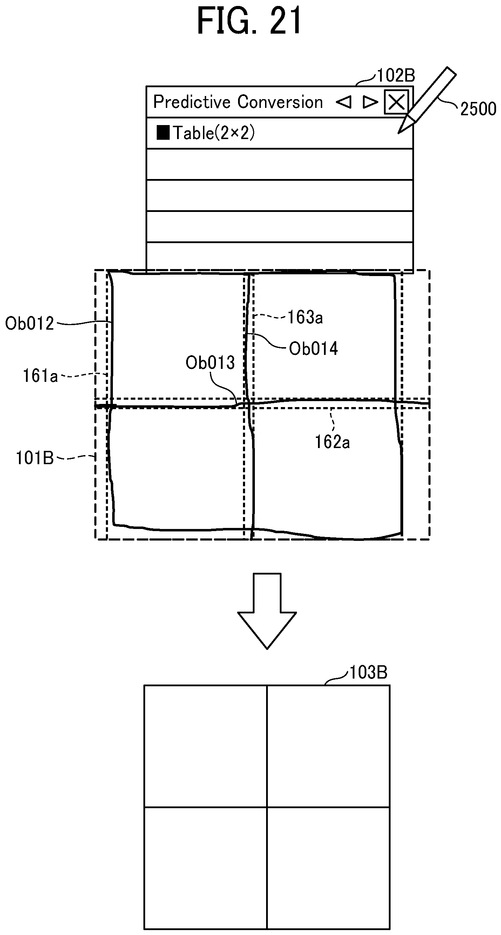

A description is given below of a display example of predictive conversion candidates with reference to FIGS. 20 and 21. FIG. 20 is a diagram illustrating an example of display of a predictive conversion candidate for a table according to the present embodiment.

In the example illustrated in FIG. 20, a case that the stroke data item representing the object Ob005 to the stroke data item representing the object Ob011, which are illustrated in FIG. 15, are determined as the same group is illustrated.

In this case, the table format prediction unit 30 of the display apparatus 2A predicts a format of a table indicated by the stroke data group on the basis of the stroke data group, which is determined as one group. Specifically, the table format prediction unit 30 predicts a candidate for the format of the table drawn in the circumscribed rectangle 101A of an object group corresponding to the stroke data group, which is determined as one group. Then, the display control unit 29 of the display apparatus 2A displays candidate for the format of the table in the vicinity of the circumscribed rectangle 101A as a list 102A of predictive conversion candidates.

When a table format is selected from the list 102A, the display apparatus 2A deletes the objects drawn in the circumscribed rectangle 101A and displays an image 103A corresponding to the selected table format.

In the example of FIG. 20, "2 rows × 3 columns" is displayed in the list 102A as the predicted table format, and "2 rows × 3 columns" is selected from the list 102A with the pen 2500. Accordingly, the display control unit 29 deletes the objects Ob005 to the object Ob011 in the circumscribed rectangle 101A, and draws the image 103A of table having "2 rows × 3 columns" in the circumscribed rectangle 101A.

FIG. 21 is a diagram illustrating another example of display of a predictive conversion candidate for a table according to the present embodiment. In the example illustrated in FIG. 21, a case that the stroke data item representing the object Ob012 to the stroke data item representing the object Ob014, which are illustrated in FIG. 16, are determined as the same group is illustrated.

In this case, the display apparatus 2A predicts, by the table format prediction unit 30, a candidate for a format of the table drawn in a circumscribed rectangle 101B of the object group. Then, the display apparatus 2A causes the display control unit 29 to display the predicted candidate for a table format in the vicinity of the circumscribed rectangle 101B as a list 102B of predictive conversion candidates.

When a table format is selected from the list 102B, the display apparatus 2A deletes the objects drawn in the circumscribed rectangle 101B and displays an image 103B corresponding to the selected table format.

In the example of FIG. 21, "2 rows × 2 columns" is displayed in the list 102B as the predicted table format, and "2 rows × 2 columns" is selected from the list 102B with the pen 2500. Accordingly, the display control unit 29 deletes the objects Ob012 to the object Ob014 in the circumscribed rectangle 101B, and draws the image 103B of table having "2 rows × 2 columns" in the circumscribed rectangle 101B.

In the present embodiment, as described above, stroke data items each determined as a part of a figure are set to one group, and when an object group corresponding to a stroke data group, which is a group of the stroked data items determined as the one group is determined to indicate a table, a table format is predicted based on the object group. Note that the format of the table in the present embodiment may be, for example, the number of rows and the number of columns included in the table. In the present embodiment, a list of predictive conversion candidates is displayed.

Accordingly, in the present embodiment, when a table is input by hand drafted input, a complicated operation such as switching from a state in which character recognition is performed (character recognition mode) to a state in which table recognition is performed (table recognition mode) is unnecessary. Further, in the present embodiment, predictive conversion candidates for a table format are displayed based on stroke data items input by hand drafted input, and a table format selected from the predictive conversion candidates is displayed. The display apparatus according to the present embodiment prevents erroneous conversion into a figure that is not intended by the user and outputs a table format that is intended by the user.

Embodiments of the present disclosure can provide significant improvements in computer capability and functionality. These improvements allow users to take advantage of computers that provide more efficient and robust interaction with tables that is a way to store and present information on information processing apparatuses. In addition, embodiments of the present disclosure can provide a better user experience through the use of a more efficient, powerful, and robust user interface. Such a user interface provides a better interaction between humans and machines.

### Variation:

The above-described embodiments are illustrative and do not limit the present disclosure. Thus, numerous additional modifications and variations are possible in light of the above teachings within the scope of the present disclosure. For example, elements and/or features of different illustrative embodiments may be combined with each other and/or substituted for each other within the scope of the present invention. Any one of the above-described operations may be performed in various other ways, for example, in an order different from the one described above.

For example, in the description of the above-described embodiments, although the vicinity rectangle is set on the assumption of Japanese handwriting, in a case where the language is not written from left to right, the vicinity rectangle is set according to the writing direction.

In the description of the above-described embodiments, the stroke data is mainly converted into Japanese, but the conversion destination language of the stroke data may be another language (English, Chinese, Hindi, Spanish, French, Arabic, Russian, etc.).

In the description of the above-described embodiments, the electronic whiteboard is used as an example to be described but is not limited thereto. The electronic whiteboard may be referred to as, for example, an electronic information board or an interactive board. The present disclosure is applicable to any information processing apparatus having a touch panel. Examples of the information processing apparatus with a touch panel include, but not limited to, a projector (PJ), a data output device such as a digital signage, a head up display (HUD), an industrial machine, an imaging device such as a digital camera, a sound collecting device, a medical device, a network home appliance, a notebook PC, a mobile phone, a smartphone, a tablet terminal, a game machine, a personal digital assistant (PDA), a wearable PC, and a desktop PC. In addition, the display apparatus 2 may use an electrophoretic method.

Further, in the embodiments described above, the display apparatus 2 detects the coordinates of the pen tip of the pen with the touch panel. However, the display apparatus 2 may detect the coordinates of the pen tip using ultrasonic waves. Further, the pen transmits an ultrasonic wave together with light emission, and the display apparatus 2 calculates a distance based on an arrival time of the ultrasonic wave. The display apparatus 2 determines the position of the pen based on the direction and the distance, and a projector draws (projects) the trajectory of the pen based on stroke data.

In the example configuration illustrated in FIG. 6, the functions of the display apparatus 2 is divided according to the main functions to facilitate the comprehension of the processing of the display apparatus 2. No limitation to a scope of the present disclosure is intended by how the processes are divided or by the name of the processes. The processing implemented by the display apparatus 2 may be divided into a larger number of processing units depending on the content of the processing. Also, one processing unit can be divided so as to include more processing units.

Each of the functions in the embodiments described above may be implemented by one or more processing circuits or circuitry. In this specification, the "processing circuit or circuitry" in the present specification includes a programmed processor to execute each function by software, such as a processor implemented by an electronic circuit, and devices, such as an application specific integrated circuit (ASIC), a digital signal processor (DSP), a field programmable gate array (FPGA), and conventional circuit modules designed to perform the recited functions.

Aspects of the present disclosure are, for example, as follows.

### First Aspect:

According to a first aspect of the present disclosure, a display apparatus includes an input reception unit to receive an input of a stroke data item. The input is a user hand drafted input. The display apparatus includes a group determination unit to determine that a plurality of stroke data items including the stroke data item is included in a group of stroke data items indicating a figure. The display apparatus includes a display control unit configured to display, on a display, a prediction result in relation to the figure based on the plurality of stroked data items included in the group.

### Second Aspect:

According to a second aspect of the present disclosure, the display apparatus according to the above-described first aspect further includes a stroke determination unit to determine that the stroke data item represents at least a part of the figure in case that the stroke data item satisfies a first condition. The group determination unit determines that another stroke data item satisfying the first condition and a second condition and being input within a predetermined time period after completion of the input of the stroke data item is included in the group same as the stroke data item.

### Third Aspect:

According to a third aspect of the present disclosure, the display apparatus according to the above-described second aspect further includes a figure prediction unit configured to output one or more predictive conversion candidates for the figure based on the plurality of stroke data items included in the group. The display control unit displays, on the display, a list of predictive conversion candidates.

### Fourth Aspect:

According to a fourth aspect of the present disclosure, in the display apparatus of any one of the above-described second and third aspects, the first condition is one of that a height of a first rectangle obtained based on a displayed object corresponding to the stroke data item is greater than a first height threshold, and that the height of the first rectangle is less than a second height threshold and the width of the first rectangle is greater than a width threshold.

### Fifth Aspect:

According to a fifth aspect of the present disclosure, in the display apparatus of any one of the above-described second to fourth aspects, the second condition is that another displayed object corresponding to the another stroke data item input within the predetermined time period after the completion of the input of the stroke data item satisfying the first condition intersects with the first rectangle obtained based on a displayed object corresponding to the stroke data item satisfying the first condition.

### Sixth Aspect:

According to a sixth aspect of the present disclosure, the display apparatus of any one of the above-described second to fifth aspects further includes a table format prediction unit to output one or more predictive conversion candidates for a table format obtained based on the plurality of stroke data items included in the group, in case that the plurality of stroke data items included in the group satisfies a third condition and a fourth condition. The display control unit displays, on the display, a list of predictive conversion candidates.

### Seventh Aspect:

According to a seventh aspect of the present disclosure, in the display apparatus of the above-described sixth aspect, the third condition is that the plurality of stroke data items included in the group includes three or more stroke data items, and two or more stroke data items of the plurality of stroke data items are ones each of which has a first rectangle having a width and a height within a first range. The first rectangle is obtained based on a displayed object corresponding to each of the two or more of the plurality of stroke data items.

### Eighth Aspect:

According to a seventh aspect of the present disclosure, in the display apparatus of the above-described seventh aspect, the fourth condition is that one of a plurality of displayed objects corresponding to the plurality of stroke data items satisfying the third condition intersects with a second rectangle including the first rectangle obtained based on another one of the plurality of displayed objects, and each of a plurality of first rectangles is within one of the first range and a second range determined in advance. The each of the plurality of first rectangle being obtained based on a corresponding one of the plurality of displayed object.

### Ninth Aspect:

According to a ninth aspect of the present disclosure, in the display apparatus of the above-described eighth aspect, the first rectangle is a circumscribed rectangle of the displayed object, and the second rectangle is a vicinity rectangle obtained by adding a preset fixed value to a width and a height of the circumscribed rectangle.

### Tenth Aspect:

According to a tenth aspect of the present disclosure, a carrier means carrying computer readable codes for controlling a computer system to carry out a method. The method includes receiving an input of a stroke data item. The input being a user hand drafted input. The method includes determining that a plurality of stroke data items including the stroke data item is included in a group indicating a figure, and displaying, on a display, a prediction result in relation to the figure. The prediction result is obtained based on the plurality of stroked data items included in the group.

### Eleventh Aspect:

According to an eleventh aspect of the present disclosure, a display method includes receiving an input of a stroke data item. The input being a user hand drafted input. The method includes determining that a plurality of stroke data items including the stroke data item is included in a group indicating a figure, and displaying, on a display, a prediction result in relation to the figure. The prediction result is obtained based on the plurality of stroked data items included in the group.

The present invention can be implemented in any convenient form, for example using dedicated hardware, or a mixture of dedicated hardware and software. The present invention may be implemented as computer software implemented by one or more networked processing apparatuses. The processing apparatuses include any suitably programmed apparatuses such as a general purpose computer, a personal digital assistant, a Wireless Application Protocol (WAP) or third-generation (3G)-compliant mobile telephone, and so on. Since the present invention can be implemented as software, each and every aspect of the present invention thus encompasses computer software implementable on a programmable device. The computer software can be provided to the programmable device using any conventional carrier medium (carrier means). The carrier medium includes a transient carrier medium such as an electrical, optical, microwave, acoustic or radio frequency signal carrying the computer code. An example of such a transient medium is a Transmission Control Protocol/Internet Protocol (TCP/IP) signal carrying computer code over an IP network, such as the Internet. The carrier medium may also include a storage medium for storing processor readable code such as a floppy disk, a hard disk, a compact disc read-only memory (CD-ROM), a magnetic tape device, or a solid state memory device.

## Claims

1. A display apparatus (2), comprising:
an input reception unit (21, 201) configured to receive an input of a stroke data item, the input being a user hand drafted input;
a group determination unit (24, 201) configured to determine that a plurality of stroke data items including the stroke data item is included in a group of stroke data items indicating a figure; and
a display control unit (29, 220) configured to display, on a display (220), a prediction result in relation to the figure, the prediction result being obtained based on the plurality of stroke data items included in the group.

2. The display apparatus (2) of claim 1,further comprising
a stroke determination unit (23, 201) configured to determine that the stroke data item represents at least a part of the figure in a case that the stroke data item satisfies a first condition, and
wherein the group determination unit (24, 201) determines that another stroke data item satisfying the first condition and a second condition and being input within a predetermined time period after completion of the input of the stroke data item is included in the group same as the stroke data item.

3. The display apparatus (2) of claim 2, further comprising
a figure prediction unit (28, 201) configured to output one or more predictive conversion candidates for the figure based on the plurality of stroke data items included in the group, and
wherein the display control unit (29, 220) displays, on the display (220), a list of the predictive conversion candidates.

4. The display apparatus (2) of any one of claims 2 and 3, wherein
the first condition is one of
that a height of a first rectangle obtained based on a displayed object corresponding to the stroke data item is greater than a first height threshold, and
that the height of the first rectangle is less than a second height threshold and a width of the first rectangle is greater than a width threshold, the second height threshold being different from the first height threshold and less than the first height threshold.

5. The display apparatus (2) of any one of claims 2 to 4, wherein
the second condition is that another displayed object corresponding to the another stroke data item input within the predetermined time period after the completion of the input of the stroke data item satisfying the first condition intersects with a second rectangle including a first rectangle obtained based on a displayed object corresponding to the stroke data item satisfying the first condition.

6. The display apparatus (2) of any one of claims 2 to 5, further comprising
a table format prediction unit (30, 201) configured to output one or more predictive conversion candidates for a table format obtained based on the plurality of stroke data items included in the group, in case that the plurality of stroke data items included in the group satisfies a third condition and a fourth condition, and
wherein the display control unit (29, 220) displays, on the display (220), a list of the one or more predictive conversion candidates.

7. The display apparatus (2) of claim 6, wherein
the third condition is that the plurality of stroke data items included in the group includes three or more stroke data items, and two or more stroke data items of the plurality of stroke data items are ones each of which has a first rectangle having a width and a height within a first range, the first rectangle being obtained based on a displayed object corresponding to each of the two or more of the plurality of stroke data items.

8. The display apparatus (2) of claim 7, wherein
the fourth condition is that one of a plurality of displayed objects corresponding to the plurality of stroke data items satisfying the third condition intersects with a second rectangle including the first rectangle obtained based on another one of the plurality of displayed objects, and each of a plurality of first rectangles is within one of the first range and a second range determined in advance, the each of the plurality of first rectangle being obtained based on a corresponding one of the plurality of displayed object.

9. The display apparatus (2) of any one of claims 5 to 8, wherein
the first rectangle includes a circumscribed rectangle of the displayed object, and the second rectangle includes a vicinity rectangle obtained by adding a preset fixed value to a width and a height of the circumscribed rectangle.

10. A carrier means carrying computer readable codes for controlling a computer
system to carry out a method, the method comprising:
receiving (S801, S803, S901, S1801, S1803, S1901) an input of a stroke data item, the input being a user hand drafted input;
determining (S804, S805, S1804, S1805) that a plurality of stroke data items including the stroke data item is included in a group indicating a figure; and
displaying (S807, S1808, S1809) on a display, a prediction result in relation to the figure, the prediction result being obtained based on the plurality of stroked data items included in the group.

11. A display method, comprising:
receiving (S801, S803, S901, S1801, S1803, S1901) an input of a stroke data item, the input being a user hand drafted input;
determining (S804, S805, S1804, S1805) that a plurality of stroke data items including the stroke data item is included in a group indicating a figure; and
displaying (S807, S1808, S1809) on a display, a prediction result in relation to the figure, the prediction result being obtained based on the plurality of stroked data items included in the group.
